# EUROPÄISCHE PATENTSCHRIFT

(11) **EP 1 415 911 B1**
(45) Veröffentlichungstag und Bekanntmachung des Hinweises auf die Patenterteilung: **29.03.2006**
(21) Anmeldenummer: 03019727.1
(22) Anmeldetag: 29.08.2003
(51) Int. Cl.: B65B 9/22, B65B 59/00

(54) **Umlenkkante zum Umformen einer Folienbahn und vertikale Schlauchbeutelmaschine mit einer derartigen Umlenkkante**
Bending edge for transforming a web of film and vertical tubular bag forming, filling and sealing machine incorporating such a bending edge
Bord déflecteur pour transformer une bande de film et machine verticale de formation, remplissage et scellage de sacs tubulaires comportant un tel bord

(30) Priorität: 02.11.2002 DE 10251066
(43) Veröffentlichungstag der Anmeldung: 06.05.2004
(73) Patentinhaber: ROVEMA VERPACKUNGSMASCHINEN GMBH, 35463 Fernwald (DE)
(72) Erfinder: Braun, Harald, 35305 Grünberg (DE); Kammler, Roman, Dr., 67547 Worms (DE); Kuss, Gerhard, 35584 Wetzlar (DE); Baur, Walter, Dr., 63584 Gründau (DE)

(56) Entgegenhaltungen:
- GB-A- 2 233 305
- US-A- 3 538 676
- US-A- 3 948 150
- US-A- 4 603 536

## Beschreibung

Die Erfindung betrifft zum einen eine Formschulter für eine vertikale Schlauchbeutelmaschine zum Umformen einer Folienbahn zu einem Folienschlauch für Verpackungszwecke. Eine Umlenkkante dieser Formschulter weist ein gekrümmtes Stück auf, weiches an seinen beiden Enden in jeweils einen Schenkel übergeht. Zum anderen betrifft die Erfindung eine vertikale Schlauchbeutelmaschine mit einer Formschulter.

Umlenkkanten dieser Art sind hinlänglich bekannt. Sie dienen einer Schlauchbildung aus der über eine Umlenkrvlte auf die Umlenkkante zu laufenden Folienbahn.

Bei einer bekannten Umlenkkante ist diese Teil einer Formschulter. Die Umlenkkante weist nackenseitig (hinten) ein gekrümmtes Stück (bezüglich ihrer Ansicht von oben) auf. Die vorderen beiden Kragenspitzen weisen jeweils einen Schenkel auf. Diese Schenkel laufen aufeinander zu. Zwischen den Enden der Schenkel ist ein Spalt vorgesehen, durch welchen die Folienbahn läuft. Die Formschulter ist zur Aufnahme eines runden Füllrohres vorgesehen.

Des weiteren ist eine vertikale Schlauchbeutelmaschine mit einer derartigen Umlenkkante an einer Formschulter der Schlauchbeutelmaschine bekannt. Bei dieser Verpackungsmaschine wird eine Folienbahn mittels eines Abzugs von einer Vorratsrolle abgewickelt und mittels der Umlenkkante zu einem Folienschlauch umgeformt. Der Folienschlauch ist dabei vertikal ausgerichtet und umschließt ein Füllrohr. Eine Längssiegeleinrichtung ist zum Verschweißen der Ränder der Folienbahn und damit zum Längsverschweißen des Folienschlauches vorgesehen. Eine Quersiegeleinrichtung ist dazu vorgesehen, mit gegeneinander bewegbaren Quersiegelbacken den Folienschlauch quer zu seiner Transportrichtung zu verschweißen. Mittels einer Trenneinrichtung wird ein durch das Füllrohr befüllter Beutel vom Folienschlauch abgetrennt. Das von der Formschulter umschlossene Füllrohr dient auch einer Vorgabe einer zu erzielenden Beutelform. So bestimmt der Umfang eines bekannten, zylinderförmigen Füllrohres den Umfang der erzeugten Beutel.

Aus der US 3,538,676 sind eine Formschulter gemäß dem Oberbegriff des Anspruchs 1 und eine vertikale Schlauchbeutelmaschine gemäß dem Oberbegriff des Anspruchs 2 bekannt. Dabei verlaufen die Schenkel der Umlenkkante parallel zueinander, um im Bereich der Kragenspitzen aufeinanderzu zu laufen, wodurch eine sehr enge Öffnung zwischen den Kragenspitzen ausgebildet wird.

Aus der US 3,948,150 ist zudem eine Formschulter einer vertikalen Schlauchbeutelmaschine bekannt, deren Kragenspitzen einander angenähert sind, jedoch eine etwas größere Öffnung begrenzen.

Die bekannten Umlenkkanten haben den Nachteil, dass sie für einen Formatwechsel ausgetauscht werden müssen. Soll also nach der Herstellung von Beuteln mit einem bestimmten Umfang eine Serie Beutel anderen Umfangs erzeugt werden, so wird das zuvor benutzte Füllrohr gegen ein neues Füllrohr, welches dem neuen Beutelformat entspricht, ausgetauscht, ebenso die zu dem Füllrohr passende Formschulter. Dieser Austausch ist nicht nur zeitintensiv. Es müssen Füllrohre und Formschultern unterschiedlicher Größe bereitgestellt werden, was somit auch kostenintensiv ist.

Der Erfindung liegt die Aufgabe zugrunde, eine Umlenkkante der eingangs beschriebenen Art dahingehend auszubilden, dass bei einem Formatwechsel kein Austausch der Umlenkkante vorgenommen werden muss.

Gelöst ist die Aufgabe gemäß den Ansprüchen 1 und 2. Nach Anspruch 1 sind die Schenkel der Umlenkkante parallel zueinander ausgerichtet und begrenzen eine Öffnung. Die parallel zueinander ausgerichteten Schenkel dienen dazu, eine relativ große seitliche Öffnung an einer Formschulter zum Einsetzen eines verstellbaren Füllrohres oder von relativ zueinander versetzbaren Schlauchführungen bereitzustellen. Wird eine annähernde Parallelität mit einem realisierten Öffnungswinkel von ungleich Null bezüglich der Schenkel vorgegeben (Anspruch 2), so kann ein derartiges Füllrohr in die sodann trichterförmig ausgebildete Öffnung von der Seite her eingebracht werden. In der Praxis ist aber die Parallelität der Schenkel zueinander von Vorteil. Ein Füllrohr oder zwei ein Füllrohr ersetzende Schlauchführungen können passgenau in diese Öffnung gesetzt werden. Bei einer Vergrößerung des Befüllquerschnittes des Füllrohres oder der Schlauchführungen kann sich das Füllrohr bzw. können sich die Schlauchführungen sodann durch die Öffnung aus der Formschulter heraus ausbreiten, d. h. die Öffnung ist insbesondere für eine wahlweise Vergrößerung des Befüllquerschnittes vorgesehen. Bei der vorgeschlagenen Schlauchbeutelmaschine gemäß Anspruch 2 werden die den Folienschlauch aufnehmenden und quasi als Füllrohr fungierenden Schlauchführungen mittels einer Einrichtung zum Verstellen des Abstandes zwischen den Schlauchführungen relativ zueinander versetzt, so dass sich die effektive Füllrohrtiefe verändert. Damit wird ohne Montage ein anderes Beutelformat eingestellt. Bei einer Vergrößerung dieser Tiefe dient die Öffnung der Umlenkkante dazu, dass eine Schlauchführung während des Verstellens durch die Öffnung nach außen aus der Formschulter heraus gestellt werden kann, um derart den Befüllquerschnitt und das Beutelformat zu vergrößern. Das Beutelformat entspricht bezüglich der Beutelbreite dem halben Umfang des Folienschlauches.

Die erfindungsgemäße Umlenkkante hat den Vorteil, dass sie bei einem Formatwechsel nicht ausgetauscht werden muss. Die vorgeschlagene Schlauchbeutelmaschine wird derart auf ein neues Beutelformat eingestellt, dass der Abstand der Schlauchführungen entsprechend verstellt wird. Dadurch wird ein neuer Befüllquerschnitt vorgegeben. Der entsprechende Umfang der beiden Schlauchführungen gibt den Umfang der Beutel vor, die das neue Format aufweisen. Sollen z. B. Beutel kleineren Umfangs hergestellt werden, so wird zunächst eine Folienbahn geringerer Breite eingesetzt. Die Schlauchführungen werden sodann derart auf die neue Folienbahn eingestellt, dass der Abstand zwischen den Schlauchführungen kleiner wird. Der entsprechende Umfang des Folienschlauches ist somit geringer, und die erzeugten Beutel werden schmäler. Das Verstellen des Abstandes erfolgt relativ schnell. Mittels einer einzigen Umlenkkante und zwei Schlauchführungen wird ein Formatbereich abgedeckt. Die früher benötigten Füllrohre mit unterschiedlichen Formaten, die diesen Formatbereich abdeckten, können derart ersetzt werden, müssen aber nicht. Ein herkömmliches Füllrohr kann auch durch die Öffnung in die Umlenkkante eingesetzt werden.

Sind die Schenkel parallel zueinander ausgerichtet (in einer Ansicht von oben) und ist die Größe der Öffnung gleich der lichten Breite der Umlenkkante, so ist die Öffnung für ein passgenaues Einsetzen eines Füllrohres oder zweier Schlauchführungen bei zuverlässigem Folienlauf über die Umlenkkante ausgebildet. Eine Formschulter zum Aufnehmen der Umlenkkante dient einem besonders zuverlässigem, d. h. ortsgenauem Folienlauf.

Ist die Einrichtung zum Verstellen im Bereich der Umlenkkante angeordnet (Anspruch 3), so ist in einfacher Weise eine Verstellung von außen her möglich. Eine vorne, d. h. zur Längssiegeleinrichtung hin offene Formschulter, welche die Umlenkkante aufweist, eignet sich besonders zur Aufnahme der Schlauchführungen, da hierbei eine Schlauchführung durch die Öffnung nach vorne aus der Formschulter zur Längssiegeleinrichtung hin herausragen kann, was insbesondere für ein großes Beutelformat mit ortsgenauer Längsnaht von Vorteil ist.

Ist nur eine ortsfeste Schlauchführung als Widerstand für den Abzug vorgesehen (Anspruch 4), so kann der Folienschlauch durch ein Andrücken gegen diesen ortsfesten Widerstand weitertransportiert werden. Bei einer Formatverstellung ist es folglich nicht notwendig, den Abzug zu verändern. Es wird allein die zweite Schlauchführung verstellt. Analoges gilt für die Längssiegeleinrichtung und eine ortsfeste Schlauchführung direkt an der Längssiegeleinrichtung. Eine durch die Form der ortsfesten Schlauchführung unterstütze Längsnahtausbildung bleibt bei einer Formatverstellung erhalten, wenn lediglich die zweite, etwas von der Längsnaht entfernte Schlauchführung verstellt wird. Prinzipiell könnte aber auch die zweite Schlauchführung ortsfest sein und mitsamt der ersten Schlauchführung könnte auch die Längssiegeleinrichtung verstellt werden, oder beide Schlauchführungen werden verstellt.

Sind die Schlauchführungen rinnenförmig ausgestaltet (Anspruch 5), so können diese Rinnen mit ihrer Wölbung nach außen ausgerichtet werden, um ein annähernd rohrförmiges Füllrohr nachzubilden. Hierbei wird ein sehr zuverlässiger Folienlauf erzielt. Als horizontaler Querschnitt einer Schlauchführung eignet sich hierbei ein halbkreisartiger oder ein halbelliptischer Querschnitt. Die aufgrund des Abstandes zwischen den Schlauchführungen verursachten beiden vertikalen Lücken auf gegenüberliegenden Seiten der Vorrichtung sind nicht störend für den Folienlauf, da sie vom Folienschlauch überspannt werden. Bezüglich des Querschnittes des Folienschlauches wirken diese Lücken so wie gerade Schlauchführungselemente dort wirken würden. Sie können aber auch durch ein Ineinandergreifen der Schlauchführungen vermieden werden, wobei aber auch in analoger Weise ein Abstand anzusetzen ist.

Ein abgeflachter Folienschlauch und insofern relativ flache Beutel werden erreicht, wenn analog Anspruch 6 die Schlauchführungen jeweils zwei parallel zueinander verlaufende Wände aufweisen, welche über ein Verbindungsstück miteinander verbunden sind. Dabei wird der Folienlauf günstig beeinflusst, wenn das Verbindungsstück im horizontalen Querschnitt einen nach außen gerichteten Bogen oder eine nach außen weisende Spitze aufweist (Anspruch 7). Ist diese Spitze in Richtung auf die Längssiegeleinrichtung zu ausgerichtet (Anspruch 8), so dient dies einer besonders ortsgenauen Längsnahterzeugung.

Im folgenden wird die Erfindung an Hand ein Ausführungsbeispiel darstellender Figuren näher beschrieben. Es zeigt:

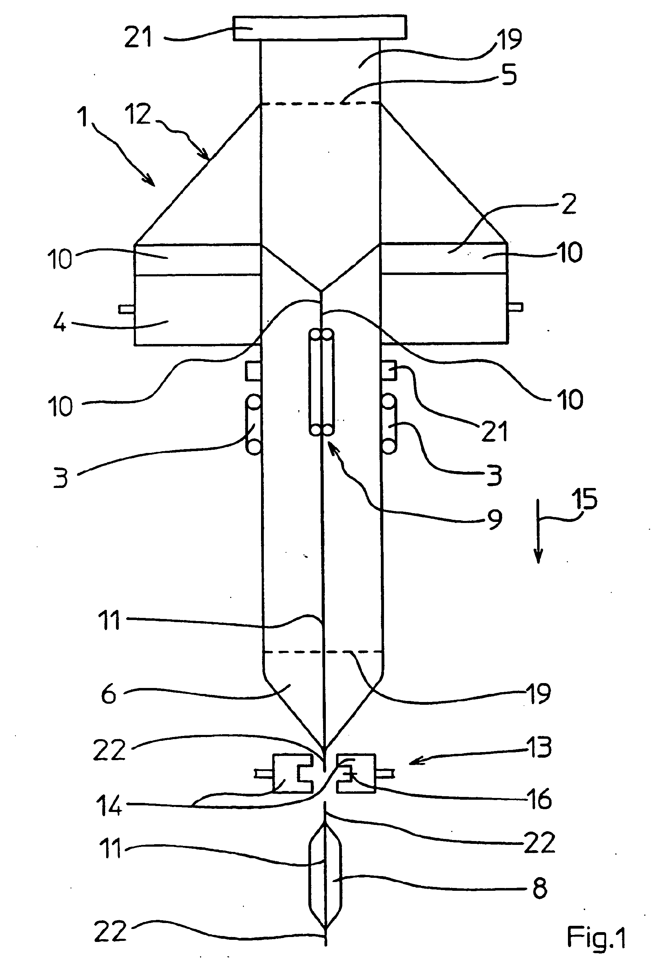

- Figur 1: in einer Seitenansicht eine vertikale Schlauchbeutelmaschine mit einer von einer Vorratsrolle abgewickelten Folienbahn, welche mittels eines Folienabzuges weitertransportiert wird, wobei an einer Umlenkkante einer Formschulter die Folienbahn zu einem Folienschlauch umgeformt wird, welcher ein abgeflachtes, aus zwei rinnenförmigen Schlauchführungen gebildetes Füllrohr umgibt, mit einer Längssiegeleinrichtung und einer Quersiegeleinrichtung zum Verschweißen des Folienschlauches, und mit einer Trenneinrichtung in einer Quersiegelbacke zum Abtrennen eines befüllten und verschweißten abgeflachten Beutels vom Folienschlauch;
- Figur 2: in einer Ansicht von oben die Formschulter der Schlauchbeutelmaschine der Figur 1;
- Figur 3: in einer Seitenansicht eine Formschulter mit eingesetzten Schlauchführungen, wobei die Schlauchführungen ein kleines Beutelformat vorgeben;
- Figur 4: in einer Ansicht von oben den Gegenstand der Figur 3, jedoch ohne Folienbahn;
- Figur 5: in einer Seitenansicht den Gegenstand der Figur 3, jedoch mit von einander weg gestellten Schlauchführungen, die somit ein größeres Beutetformat vorgeben, sowie
- Figur 6: in einer Ansicht von oben den Gegenstand der Figur 5, jedoch ohne Folienbahn.

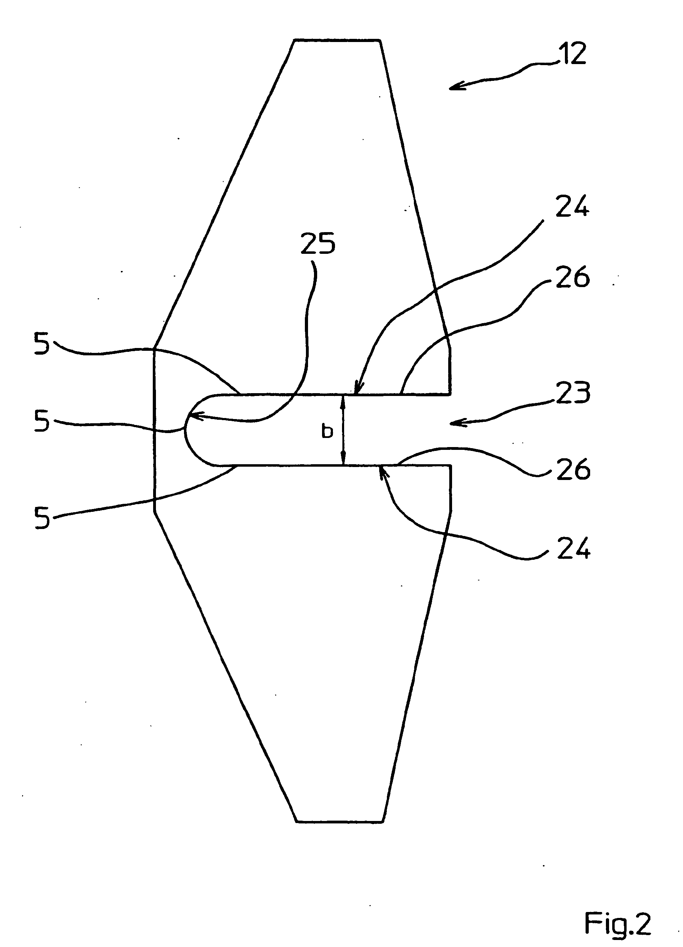

Eine Umlenkkante 5 zum Umformen einer Folienbahn 2 zu einem Folienschlauch weist ein gekrümmtes Stück 25 innerhalb der Umlenkkante 5 und zwei Schenkel 26 auf (Figur 2). Das gekrümmte Stück 25 befindet sich zwischen den Schenkeln 26 und geht stetig in die Schenkel 26 über. Die Schenkel 26 begrenzen eine Öffnung 23. Die Schenkel 26 sind parallel zueinander ausgerichtet. Die Größe der Öffnung 23 ist gleich der lichten Breite b der Umlenkkante 5. Die Umlenkkante 5 begrenzt eine Fonnschulter 12. Die Formschulter 12 ist ein Bauteil einer vertikalen Schlauchbeutelmaschine 1 (Figur 1).

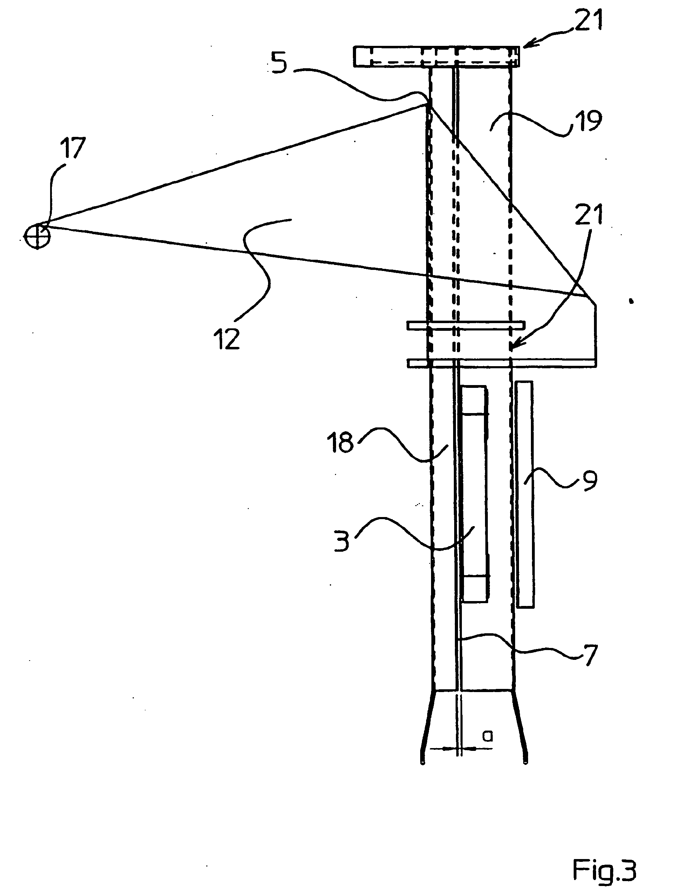

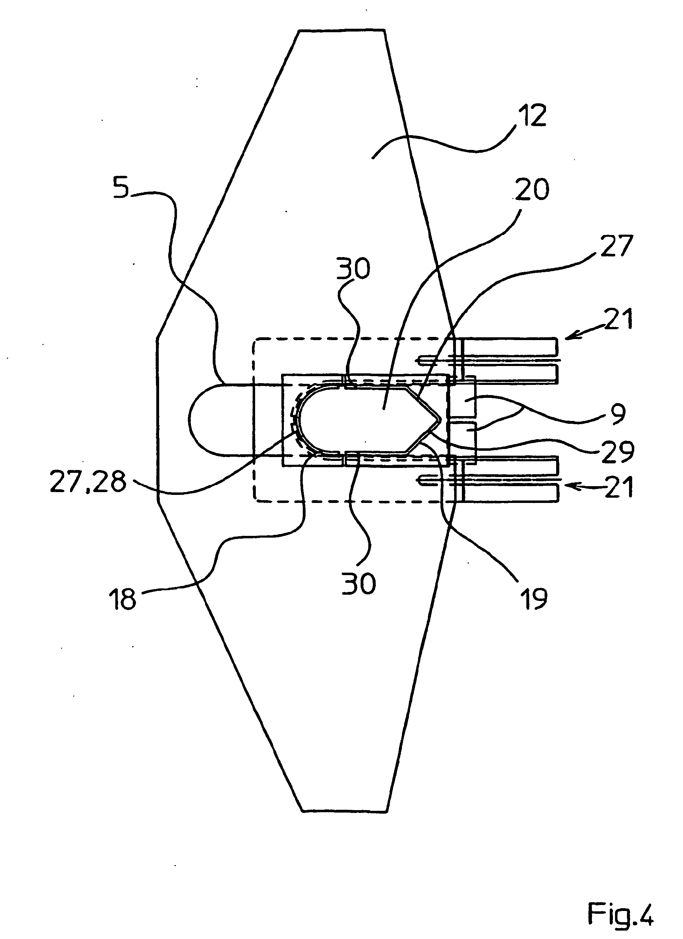

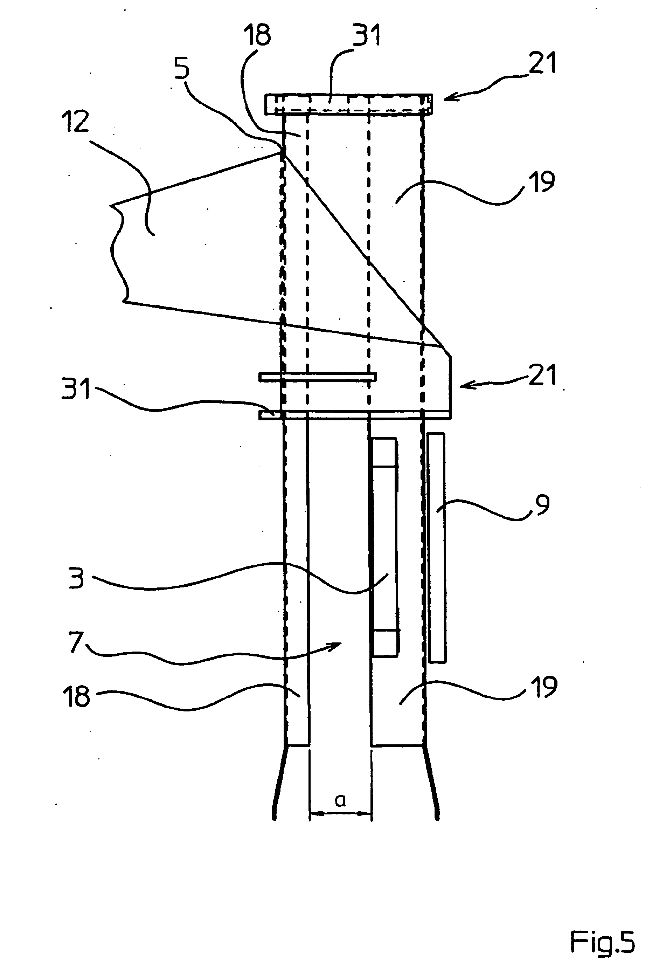

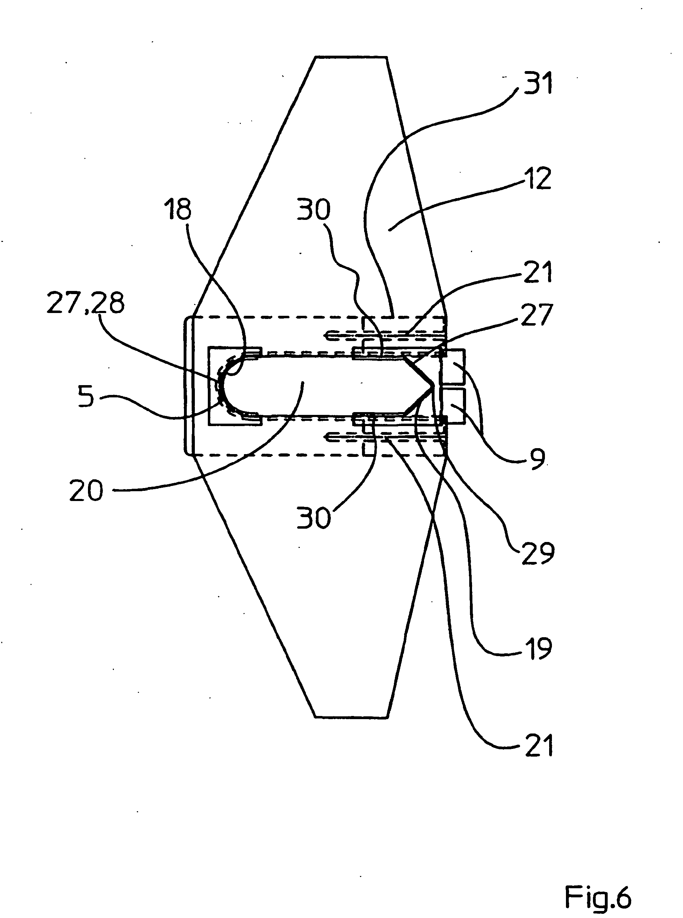

An der Schlauchbeutelmaschine 1 wird eine Folienbahn 2 mittels eines Abzugs 3 von einer Vorratsrolle 4 abgewickelt und an der Umlenkkante 5 zu einem Folienschlauch 6 umgeformt Der Folienschlauch 6 ist vertikal ausgerichtet und umschließt zwei Schlauchführungen 18, 19 (Figuren 3 bis 6). Eine Längssiegeleinrichtung 9 ist zum Verschweißen der Ränder 10 der Folienbahn 2 und damit zum Längsverschweißen des Folienschlauches 6 vorgesehen (Figur 1). Eine Quersiegeleinrichtung 13 mit gegeneinander bewegbaren Quersiegelbacken 14 ist zum Verschweißen des Folienschlauches 6 quer zu seiner Transportrichtung 15 vorgesehen. Eine Trenneinrichtung 16 dient zum Abtrennen eines erzeugten Beutels 8 vom Folienschlauch 6. Die Schlauchführungen 18, 19 sind parallel zueinander und in vertikaler Richtung ausgerichtet und begrenzen einen Befüllquerschnitt , 20 des Folienschlauches 6 (Figur 4, Figur 6). An der Formschulter 12 ist eine Einrichtung 21 zum Verstellen des Abstandes a zwischen den Schlauchführungen 18, 19 vorgesehen, um damit den Befüllquerschnitt 20 zu verändern. Die Schlauchführungen 18, 19 sind innerhalb der Umlenkkante 5 angeordnet. Eine Schlauchführung 18 ist in eine Richtung auf die Öffnung 23 zu bzw. von dieser weg verstellbar.

Nur die eine Schlauchführung 19 der beiden Schlauchführungen 18, 19 ist als Widerstand für den Abzug 3 vorgesehen. Beide Schlauchführungen 18, 19 sind rinnenförmig ausgestaltet Eine Schlauchführung 19 weist zwei parallel zueinander verlaufende Wände 30 auf, welche über ein Verbindungsstück 27 miteinander verbunden sind, und die dem Abzug 3 als Widerstand zum Weitertransport des Folienschlauches 6 dienen. Das Verbindungsstück 27 weist im horizontalen Querschnitt eine nach außen weisende Spitze 29 auf. Die Spitze 29 ist in Richtung auf die Längssiegeleinrichtung 9 zu ausgerichtet.

Die Einrichtung 21 zum Verstellen ist zum Teil im Bereich der Umlenkkante 5 der Formschulter 12 angeordnet. Innerhalb dieser Einrichtung 21 ist die rechte Schlauchführung 19 ortsfest montiert. Die linke Schlauchführung 18 kann nach links gesetzt und dort innerhalb der Einrichtung 21 in einer Halterung 31 arretiert werden. Durch dieses Versetzen werden der Befüllquerschnitt 20 für einen Folienschlauch und der Abstand a zwischen den Schtauchführungen 19 vergrößert. Im Gegensatz dazu, ist die rechte Schlauchführung 19 ortsfest und könnte nur mitsamt dem Abzug 3 und der Längssiegeleinrichtung 9 versetzt werden.

## Patentansprüche

1. Formschulter (12) für eine vertikale Schlauchbeutelmaschine (1) mit einer Umlenkkante (5) zum Umformen einer Folienbahn (2) zu einem Folienschlauch (6), mit einem gekrümmten Stück (25) innerhalb der Umlenkkante (5) und jeweils einem Schenkel (26), wobei sich das gekrümmte Stück (25) zwischen den Schenkeln (26) befindet und stetig in die Schenkel (26) übergeht, sowie die Schenkel (26) auf der dem gekrümmten Stück (25) gegenüberliegenden Seite der Umlenkkante eine Öffnung (23) begrenzen, **dadurch gekennzeichnet, dass** die Schenkel (26) parallel zueinander ausgerichtet sind, So dass die Größe der Öffnung (23) gleich der lichten Breite (b) der Umlenkkante (5) ist.

2. Vertikale Schlauchbeutelmaschine (1) mit einer Formschulter (12), deren Umlenkkante (5) ein gekrümmtes Stück (25) und jeweils einen Schenkel (26) aufweist, wobei sich das gekrümmte Stück (25) zwischen den Schenkeln (26) befindet und stetig in die Schenkel (26) übergeht, und die Schenkel (26) auf der dem gekrümmten Stück (25) gegenüberliegenden Seite der Umlenkkante (5) eine Öffnung (23) begrenzen, wobei eine Folienbahn (2) mittels eines Abzugs (3) von einer Vorratsrolle (4) abgewickelt und an der Umlenkkante (5) zu einem Folienschlauch (6) umgeformt wird, wobei der Folienschlauch (6) vertikal ausgerichtet ist, eine Längssiegeleinrichtung (9) zum Verschweißen der Ränder (10) der Folienbahn (2) und damit zum Längsverschweißen des Folienschlauches (6) vorgesehen ist, eine Quersiegeleinrichtung (13) mit gegeneinander bewegbaren Quersiegelbacken (14) zum Verschweißen des Folienschlauches (6) quer zu seiner Transportrichtung (15) vorgesehen ist; und mit einer Trenneinrichtung (16) zum Abtrennen eines erzeugten Beutels (8) vom Folienschlauch (6), **dadurch gekennzeichnet, dass** der Folienschlauch (6) zwei Schlauchführungen (18, 19) umschließt, wobei die Schlauchführungen (18, 19) parallel zueinander und in vertikaler Richtung ausgerichtet sind und einen Befüllquerschnitt (20) des Folienschlauches (6) begrenzen, dass an der Vorrichtung (7) eine Einrichtung (21) zum Verstellen des Abstandes (a) zwischen den Schlauchführungen (18, 19) vorgesehen ist, um damit den Befüllquerschnitt (20) zu verändem, dass die Schlauchführungen (18, 19) .innerhalb der Umlenkkante (5) vorgesehen sind, dass mindestens eine der Schlauchführungen (18, 19) in eine Richtung auf die Öffnung (23) zu verstellbar ist, und dass die Schenkel (26) parallel oder annähernd parallel zueinander ausgerichtet sind.

3. Schlauchbeutelmaschine nach Anspruch 2, **dadurch gekennzeichnet, dass** die Einrichtung (21) im Bereich der Umlenkkante (5) angeordnet ist.

4. Schlauchbeutelmaschine nach Anspruch 2 oder Anspruch 3, **dadurch gekennzeichnet, dass** nur eine der beiden Schlauchführungen (18, 19) als Widerstand für den Abzug (3) vorgesehen ist.

5. Schlauchbeutelmaschine nach einem der Ansprüche 2 bis 4, **dadurch gekennzeichnet, dass** eine Schlauchführung (18, 19) rinnenförmig ausgestaltet ist.

6. Schlauchbeutelmaschine nach einem der Ansprüche 2 bis 5, **dadurch gekennzeichnet, dass** eine Schlauchführung (18, 19) zwei parallel zueinander verlaufende Wände (30) aufweist, welche über ein Verbindungsstück (27) miteinander verbunden sind.

7. Schlauchbeutelmaschine nach Anspruch 6, **dadurch gekennzeichnet, dass** das Verbindungsstück (27) im horizontalen Querschnitt einen nach außen gerichteten Bogen (28) oder eine nach außen weisende Spitze (29) aufweist.

8. Schlauchbeutelmaschine nach Anspruch 7, **dadurch gekennzeichnet, dass** die Spitze (29) in Richtung auf die Längssiegeleinrichtung (9) zu ausgerichtet ist.

## Claims

1. A shaping shoulder (12) for a vertical bag-forming, -filling and -sealing machine (1) with a bending edge (5) for shaping a strip of film (2) to form a film tube (6), with a curved portion (25) inside the bending edge (5) and a respective leg (26), the curved portion (25) being situated between the legs (26) and passing in a continuous manner into the legs (26), and the legs (26) on the side of the bending edge opposite the curved portion (25) bound an opening (23), **characterized in that** the legs (26) are orientated parallel to each other, so that the size of the opening (23) is equal to the internal width (b) of the bending edge (5).

2. A vertical bag-forming, -filling and -sealing machine (1) with a shaping shoulder (12), the bending edge (5) of which has a curved portion (25) and a respective leg (26), the curved portion (25) being situated between the legs (26) and passing in a continuous manner into the legs (26), and the legs (26) on the side of the bending edge (5) opposite the curved portion (25) bound an opening (23), a strip of film (2) being unwound from a storage roll (4) by means of a draw-off device (3) and being shaped on the bending edge (5) to form a film tube (6), the film tube (6) being orientated vertically, a longitudinal sealing device (9) being provided for welding the edges (10) of the strip of film (2) and thus for welding the film tube (6) longitudinally, a transverse sealing device (13) with transverse sealing jaws (14) which are movable towards each other being provided for welding the film tube (6) transversely to its conveying direction (15), and with a separating device (16) for separating a finished bag (8) from the film tube (6), **characterized in that** the film tube (6) surrounds two tube guides (18, 19), the tube guides (18, 19) being orientated parallel to each other and in the vertical direction and bounding a filling cross-section (20) of the film tube (6), a device (21) for adjusting the distance (a) between the tube guides (18, 19) is provided on the apparatus (7) so as thereby to alter the filling cross-section (20), the tube guides (18, 19) are provided inside the bending edge (5), at least one of the tube guides (18, 19) is adjustable in the direction towards the opening (23), and the legs (26) are orientated parallel, or approximately parallel, to each other.

3. A bag-forming, -filling and -sealing machine according to Claim 2, **characterized in that** the device (21) is arranged in the region of the bending edge (5).

4. A bag-forming, -filling and -sealing machine according to Claim 2 or Claim 3, **characterized in that** only one of the two tube guides (18, 19) is provided as an abutment for the draw-off device (3).

5. A bag-forming, -filling and -sealing machine according to any one of Claims 2 to 4, **characterized in that** one tube guide (18, 19) is constructed in the form of a channel.

6. A bag-forming, -filling and -sealing machine according to any one of Claims 2 to 5, **characterized in that** one tube guide (18, 19) has two walls (30) which extend parallel to each other and which are connected to each other by way of a connecting member (27).

7. A bag-forming, -filling and -sealing machine according to Claim 6, **characterized in that** in its horizontal cross-section the connecting member (27) has a curve (28) directed outwards or a tip (29) directed outwards.

8. A bag-forming, -filling and -sealing machine according to Claim 7, **characterized in that** the tip (29) is orientated in the direction towards the longitudinal sealing device (9).

## Revendications

1. Epaulement de formage (12) pour une machine à sachets tubulaires verticale (1) avec un bord de pliage (5) pour reformer une bande de feuille (2) en un tuyau de feuille (6), avec une partie courbe (25) à l'intérieur du bord de pliage (6) et chaque fois une branche (26), la partie courbe (25) se trouvant entre les branches (26) et évoluant en continu dans les branches (26) et les branches (26) limitant une ouverture (23) sur le côté du bord de pliage opposé à la partie courbe (25), **caractérisé en ce que** les branches (23) sont dirigées parallèlement entre elles de sorte que la taille de l'ouverture (23) est égale à la largeur libre (b) du bord de pliage (5) .

2. Machine à sachets tubulaires verticale (1) avec un épaulement de formage (12) dont le bord de pliage (5) présente une partie courbe (25) et chaque fois une branche (26), la partie courbe (25) se trouvant entre les branches (26) et évoluant en continu dans les branches (26) et les branches (26) limitant une ouverture (23) sur le côté du bord de pliage opposé à la partie courbe (25), une bande de feuille (2) étant dévidée au moyen d'un soutirage (3) d'un rouleau de stockage (4) et reformée sur le bord de pliage (5) en un tuyau de feuille (6), le tuyau de feuille (6) étant dirigé verticalement, un dispositif de scellement longitudinal pour souder les bords (10) de la bande de feuille (2) et ainsi souder longitudinalement le tuyau de feuille (6) étant prévu, un dispositif de scellement transversal (13) avec des joues de scellement transversal (14) mobiles en sens opposé pour souder le tuyau de feuille (6) transversalement à sa direction de transport (15) étant également prévu et avec un dispositif de séparation (16) pour séparer un sac (8) produit à partir du tuyau de feuille (6) **caractérisée en ce que** le tuyau de feuille (6) comporte deux guidages de tuyau (18, 19), les guidages de tuyau (18, 19) étant dirigés parallèlement entre eux et en direction verticale et limitant une section de remplissage (20) du tuyau de feuille (6), **en ce que** sur le dispositif (7) il est prévu un dispositif (21) pour régler l'écart (a) entre les guidages de tuyau (18, 19), pour modifier ainsi la section de remplissage (20), **en ce que** les guidages de tuyau (18, 19)sont prévus à l'intérieur du bord de pliage (5), **en ce que** au moins l'un des guidages de tuyau (18, 19) peut être réglé dans une direction sur l'ouverture (23) et **en ce que** les branches (26) sont dirigées parallèlement ou à peu près parallèlement entre elles.

3. Machine à sachets tubulaires selon la revendication 2, **caractérisée en ce que** le dispositif (21) est disposé dans la zone du bord de pliage (5).

4. Machine à sachets tubulaires selon la revendication 2, **caractérisée en ce que** seulement l'un des deux guidages de tuyau (18, 19) est prévu comme résistance au soutirage (3).

5. Machine à sachets tubulaires selon l'une des revendications 2 à 4, **caractérisée en ce qu'**un guidage de tuyau (18, 19) est configuré de manière annulaire.

6. Machine à sachets tubulaires selon l'une des revendications 2 à 5, **caractérisée en ce qu'**un guidage de tuyau (18, 19) présente deux parois s'étendant parallèlement entre elles, qui sont reliées entre elles par une pièce de liaison (27).

7. Machine à sachets tubulaires selon la revendication 6, **caractérisée en ce que** la pièce de liaison (27) présente dans sa section horizontale un arc (28) ou une pointe dirigée vers l'extérieur.

8. Machine à sachets tubulaires selon la revendication 7, **caractérisée en ce que** la pointe est dirigée en direction du sens de réglage longitudinal (9).
